# EUROPEAN PATENT SPECIFICATION

(11) **EP 3 612 488 B1**
(45) Date of publication and mention of the grant of the patent: **28.10.2026**
(21) Application number: 18713710.4
(22) Date of filing: 03.04.2018
(51) Int. Cl.: B66C 23/18, B66C 23/20, F03D 13/20

(54) **HOISTING SYSTEM FOR INSTALLING A WIND TURBINE**
HEBESYSTEM ZUM INSTALLIEREN EINER WINDTURBINE
SYSTÈME DE HISSAGE POUR L'INSTALLATION D'UNE ÉOLIENNE

(30) Priority: 03.04.2017 NL 1042325
(43) Date of publication of application: 26.02.2020
(73) Proprietor: Lagerwey Wind B.V., 3771 MR Barneveld (NL)
(72) Inventor: PUBANZ, André Heinz, 3824 DK Amersfoort (NL); LAGERWEIJ, Hendrik Lambertus, 3774 CT Kootwijkerbroek (NL); VAN DE POL, Aart, 6731 EJ Otterlo (NL); WAAIJENBERG, Albertus, 3772 JM Berneveld (NL)
(74) Representative: Eisenführ Speiser
(86) International application number: PCT/EP2018/058505
(87) International publication number: WO 2018/185111

(56) References cited:
- EP-A2- 1 677 007
- WO-A1-02/34664
- WO-A1-2011/082710
- WO-A1-2015/003733
- US-A1- 2010 139 062
- US-A1- 2016 010 623

## Description

### Field of the invention

The present invention relates to a hoisting system for the installation of a wind turbine and a method for a hoisting operation using a hoisting system for an installation of a wind turbine.

### Background of the invention

The costs of labor and maintenance of wind turbines increase only gradually with increasing turbine size, and therefore to minimize costs, wind turbines are getting bigger and bigger. With increasing size and height, the installation costs of the turbines are not rising gradually but at least linearly with turbine size. The largest industrial cranes available are required to install the largest land-based wind turbines. Those heavy modular crane units are expensive, often require strengthening of the roads and special transportation permits. In addition to these disadvantages said cranes need a lot of space which is not always available and when such a crane is needed for the next turbine in a wind farm it may occur that the crane cannot move thereto for example because the terrain is complex or the roads are too small. Then the crane has to be decommissioned, transported in parts and commissioned again which is an inefficient time-consuming operation.

As explained the installation costs rise quickly with the size of the required crane. The size of the crane is determined by the maximum weight of the hoist and by the reach of the crane. The reach of the crane is determined essentially by the height of the turbine. So in particular the heavy parts at the top of the wind turbine are responsible for the high installation costs. Dozens of trucks are required just to transport such a crane in case of an onshore turbine. For an offshore turbine, cranes are required which are installed on so-called jack-ups: self-elevating platforms with moveable legs capable of raising the hull over the surface of the sea. This is also a very expensive method.

A relatively new solution is to use a crane which climbs along the tower of a wind turbine under construction. Such a crane leads to a major reduction of the installation costs. However for the installation of the heaviest parts of the top of the wind turbine the loads exerted by the climbing crane to the wind turbine are very high. This increases the costs of the climbing crane and requires strengthening of the wind turbine which further increases costs. Another method is that disclosed in US8069634, wherein a lifting frame is installed on top of the wind turbine tower with a conventional crane so that subsequently the lifting frame can hoist the heavy parts to the tower top. The lifting frame of this solution is a large and heavy structure and although there is some improvement compared to the use of a large industrial crane, the costs are still high and much time is required to commission the lifting frame at the site.

WO 2015/003733 A1 discloses a hoisting system for the installation and maintenance of a wind turbine. The hoisting system comprises a first hoisting device which has a first hoisting cable and comprises measures for creating a load bearing joint with an already built part of the wind turbine. The hoisting system comprises a second hoisting device.

WO 2011/082710 A1 discloses a hoisting system for hoisting parts of a wind turbine. A first part of the hoisting system is a crane arranged on top of the wind turbine and a second hoisting system is a portable crane. This document discloses the preamble of claim 1.

US 2016/010623 A1 discloses a hoisting system with a hoisting device attached to the wind turbine. A load to be hoisted is fastened to a hoisting cable and hoisted towards the upper part of the wind turbine.

EP 1 677 007 A2 discloses a hoisting system for a wind turbine which is arranged at the machine housing. The hoisting system comprises a crane which uses a cable to hoist the loads.

US 2010/139062 A1 discloses a hoisting system for a wind turbine, wherein two cables are used to hoist a load.

WO 02/34664 A1 discloses a hoisting system arranged on a wind turbine which uses a hoisting cable to hoist a load.

Therefore there is a need to be able to install both offshore and onshore wind turbine more efficiently and in particular without the need of a large general purpose crane.

### Summary of the invention

The aim of the invention is to overcome the above-mentioned disadvantages of existing solutions.

Hereto, according to the invention a hoisting system is proposed for the installation and or the decommissioning and or the maintenance of a wind turbine, the wind turbine comprising at least a foundation, a tower, a yawing part and a rotor of at least 80m diameter with at least one blade, the hoisting system comprising a first hoisting device which comprises measures to establish a load carrying joint with an already built part of the wind turbine which is located above the foundation, wherein a ratio between the maximum hoist load of the first hoisting device and the mass of the heaviest part which is larger than 0.2 and smaller than 1 and in particular smaller than 0.8 and more in particular smaller than 0.7 and preferably smaller than 0.6, with the heaviest part being a part which is hoisted as one piece and which belongs to the yawing part of wind turbine.

The hoisting system comprises a second hoisting device. The second hoisting device comprises a second hoisting cable. The hoisting system further comprises a balancing device which distributes the mass of the heaviest part in a mass part carried by the first hoisting device and a part carried by the second hoisting device, wherein the mass part carried by the first device is between 1 % and 99%, in particular between 20% and 80%, more in particular between 40% and 60% and preferably wherein the first hoisting device and the second hoisting device each carry approximately 50%.

At first sight the expert in the art would never design such a hoisting system since it seems incapable of hoisting the maximum hoist. Surprisingly one should realize that by using the combination of the first hoisting device and the crane which was used to install the first hoisting device, there is sufficient capacity. The amazing result is that the first hoisting device can be lighter, thus less expensive and that the loads it will exert on the turbine are less, so that the joints can be cheaper and that the hoisting system is capable of hoisting the heaviest part. Advantageously the hoisting system distributes the hoist load over at least the first and another hoisting device. This way both systems can be dimensioned for a lower maximum load and thus will be cheaper and lighter.

Another benefit of the embodiment of the invention is that wherein the hoist is hoisted by two hoisting cables, each fixed at one end to the hoist and at the other end to a different hoisting device, so that it can be controlled better and becomes less sensitive to the wind. The hoist can be positioned more accurately which speeds up the installation process and reduces the risk of a damaging collision between the hoist and the already installed part of the wind turbine.

The first hoisting device of the hoisting system is supported on the yawing part of the wind turbine. The yawing part may be defined as the part of the wind turbine which can yaw with respect to the tower top. Another possible definition is that the yawing part is the part of the wind turbine which is connected to the turnabie part of the yaw bearing of the wind turbine if such a bearing is present. Parts of the wind turbines which usually belong to the yawing part are the main frame, the nacelle, the generator which can be a direct drive generator, the gear box if present, the hub, the blades, possibly the transformer. Also the yaw bearing itself is considered to be part of the yawing part.

In an embodiment the first hoisting device is connected to the tower top and thus not to the yawing part.

In an embodiment the maximum hoist capacity of the first hoisting device is less than 100 tons and in particular of less than 90 tons and more in particular of less than 80 tons, in a further preferred embodiment, the weight of the heaviest part which is hoisted in one piece and which belongs to the yawing part of the wind turbine is more than 100 tons and in particular more than 110 tons.

In an embodiment of the hoisting system the first hoisting device comprises a winch which is fixed to the first hoisting device, so that the loads exerted by the winch are passed via the first hoisting device and via its connections point to the already installed part of the wind turbine.

In an embodiment the first hoisting device of the hoisting system comprises a beam with the lifting point and at least one connection point for creating a load bearing connect between the hoisting device and the already built part of the wind turbine, wherein the lifting point can move relative to the at least one connection point and in particular that this movement allows for a horizontal displacement by more than 1 m and more in particular more than 3m and preferably more than 5m and less than 30m. The horizontal displacement may be accompanied with a vertical displacement at the same time.

According to an example the hoisting system further comprises a second hoisting device which can be a multi-purpose industrial crane. The advantage is that the industrial crane can have a smaller capacity since it does not need to hoist the full weight of the heaviest parts but can share the load with the first hoisting device. The second hoisting device can also be a crane which is supported by the bottom of the water wherein the wind turbine is installed, or a crane on a vessel, which vessel may be stabilized by a structure to the bottom of the water.

According to an embodiment of the invention the second hoisting device is a crane which is installed to the tower of the wind turbine, possibly with the ability to climb along the tower. Such a second hoisting device can be smaller and cheaper if it does not need to hoist the heaviest part alone. Also the loads transferred to the tower by such a second hoisting device are less and thus less tower strengthening is required, which further reduces the costs. According to this embodiment of the invention the heaviest parts are hoisted by the first hoisting device and by the second hoisting device.

According to an embodiment of the invention the second hoisting device comprises measures to make a load bearing connection to the tower of the wind turbine, wherein the wind turbine tower comprises matching points for receiving the second hoisting device. The second hoisting device further comprises measures for climbing along the tower, in particular essentially in vertical direction.

A definition of the heaviest part is the heaviest part of the wind turbine which belongs to the yawing part of the wind turbine and is hoisted in a single hoist. Examples of heaviest parts are the direct drive generator, the rotor of the wind turbine, or substantial parts of the direct drive generator or the rotor.

According to an embodiment of the invention the hoisting system further comprises a third hoisting device. For example the first hoisting device is fixed to the yawing part of the wind turbine, the second hoisting device is fixed to the tower of the wind turbine and the third hoisting device is a relatively small multi-purpose industrial crane, which may be used to install the second hoisting device to the tower or possibly for picking the first hoisting device from a truck to a position from where the second hoisting device may take it over. The third hoisting device may be used further for picking the heaviest load from a transportation means, such as e.g. a truck, and moving it to a position where the first and the second hoisting devices take over the load. More in general the third hoisting device may at least during a part of the hoisting operation carry a part of the mass of the heaviest part.

The balancing device may be a pulley with its shaft connected to the hoist and wherein the cable over the pulley is connected at one side to the first hoisting device and with the other side to the second hoisting device. The balancing device may alternatively be a structural beam which is supported by the first hoisting device at one end and by the second hoisting device at the other end. The hoist load can be connected to a lifting point in the middle of the structural beam so that the hoist is evenly distributed over the hoisting devices when the structural beam is in an about horizontal position. The lifting point can also be closer to one end so that the hoisting system at that end will receive a higher share of the load.

In an embodiment the hoisting system further comprises a control system which uses data on the stand and loading of both the first and the second hoisting devices to control both devices and in particular which uses the measured loads of the first hoisting device to control the operation of the second device and more in particular also uses the loads of the second hoisting device to control the operation of the first hoisting device. Such a control system avoids that operation of the first hoisting device causes an overload of the second device and the other way around.

According to an aspect of the invention a method is proposed for installing a wind turbine, the method comprising the hoisting of the first hoisting device by another hoisting device to a position where it is fixed to an already built part of a wind turbine, above the foundation. In particular the first hoisting device is installed to the yawing part of the wind turbine.

The method further comprises the hoisting of the heaviest part by at least the first hoisting device wherein, during the hoisting operation, the largest mass part of the heaviest part which is carried by the first hoisting device is less than 99%, in particular less than 80%, more in particular less than 60% and preferably about 50%.

In an embodiment the method further comprises that during a part of a hoisting operation of the heaviest part by only the first hoisting device and the second hoisting device, there is a hoisting position where the first hoisting device would be overloaded in the case that only the first hoisting device would carry the heaviest part and in particular that there is a hoisting position where the second hoisting device would be overloaded in the case that only this second device would carry the heaviest part.

In an embodiment of the hoisting system comprises a first hoisting device which comprises means for supporting it on the yawing part of the turbine under construction, a second hoisting in the form of a climbing crane and a third hoisting device in the form of a relatively small industrial crane. The industrial crane installs the climbing crane. The climbing crane installs the higher tower segments, the main frame and the nacelle and the first hoisting device. The first hoisting device together with the climbing crane subsequently install the direct drive generator, the hub and the blades. The advantage of this hoisting system using this hoisting method is that a large industrial crane is not required for an onshore wind turbine. In the case of an offshore turbine, the use of a largest lifting vessel or a jack-up is avoided, by using the climbing crane to install the first hoisting device and subsequently using the first hoisting device and the climbing crane for hoisting the yawing part of the wind turbine in part or in a single hoist.

### Brief description of the drawings

The following drawings show exemplary embodiments of the invention without the balancing device.
Fig. 1: a wind turbine under construction and a hoisting system;
Fig. 2: a wind turbine under construction and a hoisting system;
Fig. 3: a wind turbine under construction and a hoisting system;
Fig. 4: a wind turbine tower with a climbing crane and a fixation point, and
Fig. 5: a wind turbine under construction with a rail-type fixation point.

The drawings are to be understood not to be drawn to scale.

### Detailed description of the invention

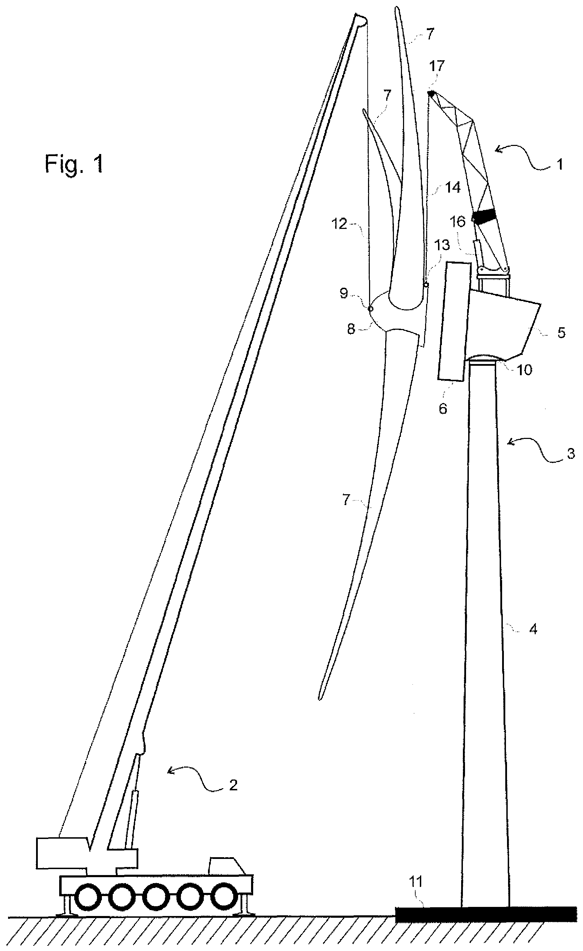

Fig. 1 shows a hoisting system comprising a first hoisting device 1 and a second hoisting device 2 which is used for the installation of a wind turbine under construction 3. The wind turbine comprises a foundation 1 1 , a tower 4 and a yaw bearing 10. The yawing part comprises a nacelle 5, a direct drive generator 6 and a rotor which comprises a hub 8 and one or more blades 7. The rotor may be the heaviest part. The first hoisting device is supported on the yawing part of the wind turbine and comprises a beam 15 and a hoisting cable 4 which is fixed to hoisting point 13 of the rotor. The second hoisting device comprises a hoisting cable 12 and is fixed to hoisting point 9 of the rotor. It further comprises actuator 16 which allows for an inter alia horizontal movement of the lifting point 17.

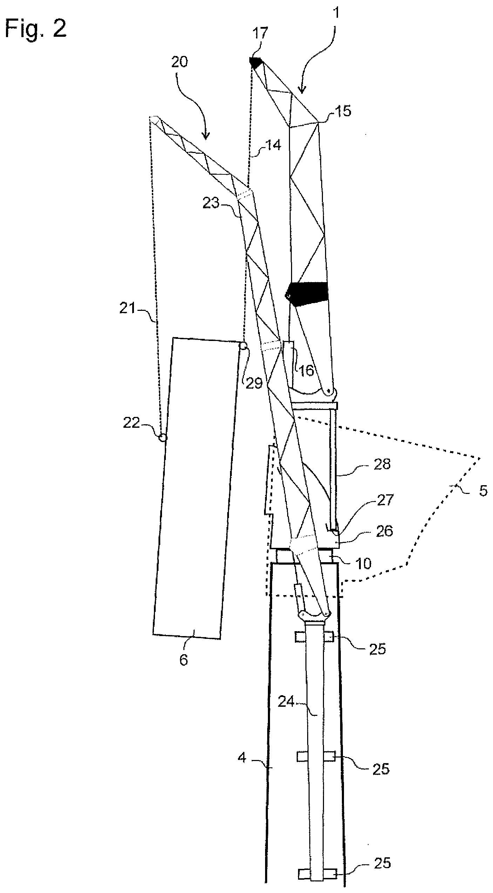

Fig. 2 shows another hoisting system comprising a first hoisting device 1 and a second hoisting device 20, which is used for the installation of a wind turbine under construction. The nacelle 5 of the wind turbine under construction is drawn transparent in this figure, so that the main frame 26 is visible which is supported to yaw bearing 10. The main frame has a support 27 whereon a beam 28 of the first hoisting device 1 is mounted. The first hoisting device is hoisting a part of the mass of the generator 6 via hoisting cable 14 which is fixed to hoisting point 29. The second hoisting device is a climbing crane with a column 24 which is mounted to the wind turbine tower 4 by fixation points 25 which are installed to the tower. The climbing crane further comprises the beam 23 and hoisting cable 21 with is fixed to hoisting point 22 on the direct drive generator 6. The direct drive generator may be the heaviest part, which is hoisted by the combination of the first hoisting device and the second hoisting device.

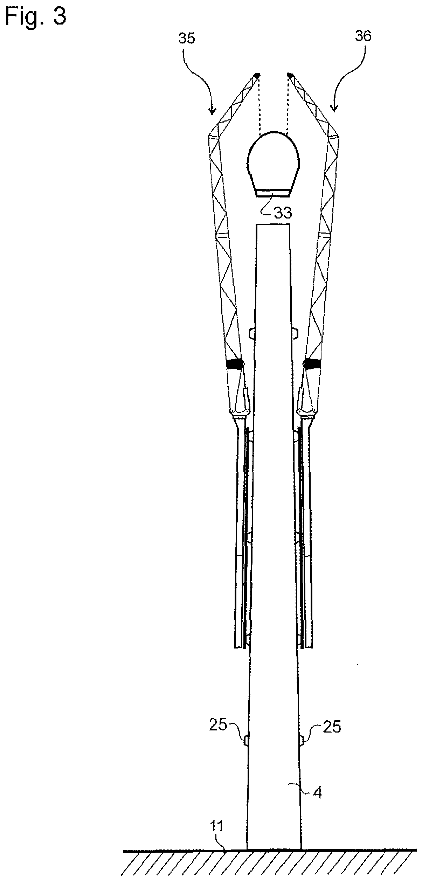

Fig. 3 shows again another hoisting system comprising a first hoisting device in the form of climbing crane 35 and a second hoisting device in the form of a climbing crane 36. In the figure 3 only two of the many fixation points 25 are numbered. The heaviest part is the nacelle 33 which is hoisted by the hoisting system, i.e. by the two climbing cranes.

In figures 1 to 3 the first and or the second hoisting devices have insufficient capacity to hoist and install the heaviest part alone.

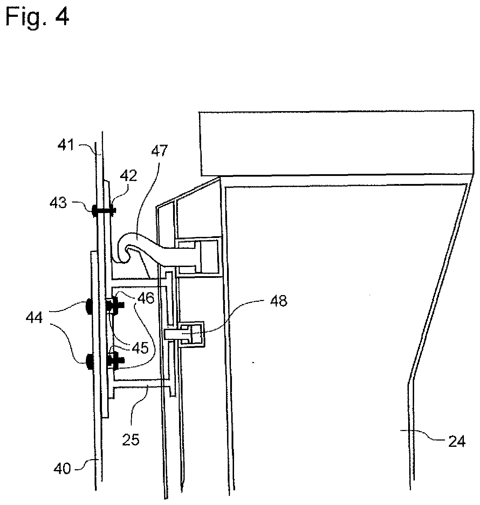

Fig. 4 shows a cross section of a part of the tower of a wind turbine with lower tower segment 40 and an upper tower segment 41, that of a fixation point 25 and that of a part of a climbing crane 24, of which crane also a locking pin 48 and a locking hook 47 are drawn. The fixation point is fixed to the tower segments in a detachable manner by bolts 43 and 44. By removing nuts 42 and 46, the fixation point 25 can be taken off and be reused on another wind turbine tower. The connection between the tower segments is remained by bolts 44 combined with nuts 45.

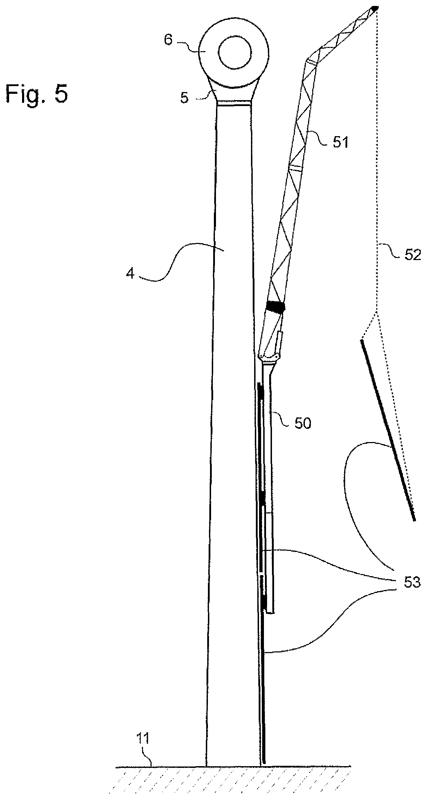

Fig. 5 shows a wind turbine under construction with a climbing crane 50 with a beam 51 and a hoisting cable 52. The climbing crane is attached to rail-type fixation points 53 and possibly can move in essentially vertical direction along the rail type fixation points. The rail type fixation points can be completely or partially removed from the tower. The climbing crane may install the higher fixation points and may take them off, completely or partially, so that they can be reused for another wind turbine. The rail type fixation points can be connected to each other and can be connected to the wind turbine tower by any known method such as e.g. a bolted connection. The connection is not shown in figure 5.

The hoisting system according to the invention may comprise a climbing crane which is fixed to any of the fixation points on the tower and possibly can move along the tower. The fixation points which are required for the installation of a wind turbine contribute considerably to the costs. According to an embodiment of the invention, the fixation points are partly or fully removable so that they can be taken off after the installation of the wind turbine and can be reused for the installation or the maintenance or the decommissioning of another wind turbine. A method to install the fixation points comprises any of the steps of installing one or more lower fixation points by a small multipurpose crane, the installation of the climbing crane to the installed fixation points and the installation of higher fixation points with the climbing crane. Alternatively, a small auxiliary crane, fixed to the wind turbine, for example to the yawing part of the wind turbine, is used to hoist the fixation points to the positions where they are installed. The same methods, in reversed order can be used to remove the fixation points. A possibility is that a part of the fixation points is removable and a part not, another possibility is that some fixation points are partly removable, for example essentially the part at the outside of the tower can be removable while essentially the inward part remains on the tower.

According to one aspect the fixation points are attached to the tower using bolts, the bolts are attached to extend in a horizontal way through a wall of the tower, in particular for connecting two overlapping tower segments made of metal to each other, and each fixation point is attached to the tower by completely or partly using at least one of the bolts and using additional nuts fixing the fixation point to the bolts and thereby fixing the fixation point to the tower. This way the fixation points can be installed in an effective way and at the same time provide a solution that allows the fixation points to be removed. According to one aspect the bolts remain in the tower wall when removing the fixations points and that may avoid the need to close the corresponding bores.

The term climbing crane in the above description may be interpreted as any crane which can be attached to an already installed part of the wind turbine above the foundation and is capable of installing at least the upper quarter of the tower. An embodiment of the climbing crane can climb along the tower essentially in vertical direction. In another embodiment of the climbing crane it can be fixed at a single position to the tower above the foundation and the climbing only refers to the single step of moving from ground level to this single position A fixation point can be any structure which is attached to the tower before a climbing crane is connected to it, with the purpose to distribute over a certain tower area, the forces exerted by the climbing crane to the tower, so that the tower will not be overloaded. According to an embodiment of the invention such a fixation point can be partly or completely taken off the tower and the detachable parts can be reinstalled on another tower. A tower can have several distinct fixation points with at least 5 meters and in particular at least 10 meters between the positions where the climbing crane connects. Alternatively, a fixation point can be of a linear type e.g. it can be a rail over which the climbing crane can move up and down and is called a rail-type fixation point. According to an embodiment of the invention such a rail-type fixation point can also be partly or completely removed so that the removable parts can be reinstalled on another tower.

The term another tower can refer to another tower under construction. The tower of the turbine can be made of any material and in particular of metal, concrete, wood, composite or a combination thereof. One or more holes in the tower wall are an option to facilitate e.g. the installation of a fixation point and such holes may be closed with a plug e.g. of rubber in the case that a fixation point is partly of completely removed.

The above description focuses at the installation of wind turbines using a hoisting system. The invention is not limited to the installation of wind turbines and may additionally or alternatively be used for maintenance or decommissioning of wind turbines using the hoisting system.

The hoisting system may be controlled via a computer that only allows for operation within the operational limits of the system. The system may be controlled by remote and fixed controllers, e.g. from the ground, in the crane and in the turbine under construction. A crane operator may be assisted by camera's.

It is to be understood that in the present application, the term "comprising" does not exclude other elements or steps. Also, each of the terms "a" and "an" does not exclude a plurality. Any reference sign{s) in the claims shall not be construed as limiting the scope of the claims.

## Claims

1. A hoisting system for at least one of an installation, a decommissioning and a maintenance of a wind turbine (3), the wind turbine comprising a foundation (11), a tower (4), a yawing part and a rotor of at least 80m diameter with at least one blade (7), the hoisting system comprising
a first hoisting device (1, 35) which has a first hoisting cable (14) and comprises measures which are configured to create a load carrying joint with an already built part of the wind turbine which is located above the foundation,
a second hoisting device (2, 20, 36) which has a second hoisting cable (21), and
a balancing device which is configured to distribute a mass of a heaviest part in a portion carried by the first hoisting device and a portion carried by the second hoisting device, wherein the mass portion carried by the first hoisting system is between 1% and 99%, in particular between 20% and 80%, more in particular between 40% and 60% and preferably wherein the first hoisting device and the second hoisting device each carry approximately 50%,
wherein during the hoisting of the heaviest part, the distribution of the load over at least the first and the second hoisting device in a ratio between the maximum hoisting capacity of the first hoisting device and a mass of a heaviest part which is larger than 0.2 and smaller than 1, with the heaviest part being a part which is hoisted as one piece and which belongs to a yawing part of the wind turbine,
wherein the first and second hoisting cable (14, 21) are each connectable to the part to be hoisted,
**characterized in that**, the second hoisting device (20, 36) comprises measures which are configured to create a load bearing connection to a tower of the wind turbine and in particular also comprises measures for moving the second hoisting device along the tower.

2. The hoisting system according to claim 1, **characterized in that** the first hoisting device has a maximum hoisting load of less than 100 tons and more in particular of less than 80 tons and that the heaviest part has a mass of more than 100 tons.

3. The hoisting system according to claim 1, further comprising a third hoisting device wherein the third hoisting device at least during a part of the hoisting operation carries a portion of the mass of the heaviest part and in particular that the third hoisting device is a conventional crane located next to and separated from the wind turbine.

4. A method for a hoisting operation using a hoisting system for at least one of an installation, a decommissioning and a maintenance of a wind turbine (3), wherein the wind turbine comprising a foundation (11), a tower (4), a yawing part and a rotor of at least 80m diameter with at least one blade (7), wherein the hoisting system comprising a first hoisting device (1, 35) which has a first hoisting cable (14) and comprises measures for creating a load carrying joint with an already built part of the wind turbine which is located above the foundation,
wherein the hoisting system comprises a second hoisting device (2, 20, 36) which has a second hoisting cable (21) and
wherein hoisting system further comprises a balancing device so that it distributes the mass of the heaviest part in a part carried by the first hoisting device and a part carried by the second hoisting device, wherein the mass part carried by the first hoisting system is between 1% and 99%, in particular between 20% and 80%, more in particular between 40% and 60% and preferably wherein the first hoisting device and the second hoisting device each carry approximately 50%,
wherein during the hoisting of the heaviest part, the hoisting system distributes the load over at least the first and the second hoisting device in a ratio between the maximum hoisting capacity of the first hoisting device and a mass of a heaviest part which is larger than 0.2 and smaller than 1, with the heaviest part being a part which is hoisted as one piece and which belongs to the yawing part of the wind turbine,
wherein the first and second hoisting cable (14, 21) are each connectable to the part to be hoisted, and
**characterized in that**
the second hoisting device (20, 36) comprises measures for creating a load bearing connection to the tower of the wind turbine and in particular also comprises measures for moving the second hoisting device along the tower.

5. The method according to claim 4, further comprising the steps of: hoisting of the heaviest part by at least the first hoisting device and second hoisting device **characterized in that**, during the hoisting operation, a largest mass part of the heaviest part which is carried by the first hoisting device is less than 99%, in particular less than 80%, more in particular less than 60% and preferably about 50%, with the heaviest part being a heaviest part which is hoisted as one piece and belongs to the yawing part of the wind turbine.

6. The method according to claim 5, **characterized in that** during a part of the hoisting operation of the heaviest part by at least a combination of the first hoisting device and the second hoisting device, wherein there is a hoisting position where the first hoisting device would be overloaded if only the first hoisting device would carry the heaviest part and in particular wherein there is a hoisting position where the second hoisting device would be overloaded if only this second device would carry the heaviest part.

7. A method for a hoisting operation using a hoisting system according to claim 4, **characterized in that** one or more fixation points are partly or completely installed on the tower in order to be used by the climbing crane and later, that any of the one or more fixation points is partly or completely removed so that the removed complete fixation points (25) or the removed parts of the fixation points can be reused for another hoisting operation for another wind turbine.

8. The method according to claim 7, wherein
- the fixation points (25) are attached to the tower (4) using bolts (44),
- the bolts (44) are attached to extend in a horizontal way through a wall of the tower (4), in particular for connecting two overlapping tower segments (40, 41) made of metal to each other, and
- at least one fixation point is attached to the tower by completely or partly using at least one of the bolts and using nuts fixing the fixation point to the bolts and thereby fixing the fixation point to the tower.

9. The method according to claim 4, that the first hoisting device (1) is supported on the yawing part of the wind turbine.

10. The method according to claim 4, wherein fixation points (25) are provided on the tower,
wherein a climbing crane (24) is fixed to any of the fixation points and is able to move along the tower,
wherein any of the fixation points are partly or fully removable so that they can be taken off after the installation of the wind turbine and can be reused for the installation or the maintenance or the decommissioning of another wind turbine.

## Patentansprüche

1. Hebesystem für eine Installation, eine Demontage und/oder eine Wartung einer Windenergieanlage (3), wobei die Windenergieanlage ein Fundament (11), einen Turm (4), einen Gierteil und einen Rotor mit mindestens 80 m Durchmesser mit mindestens einem Blatt (7) umfasst, wobei das Hebesystem umfasst:
eine erste Hebevorrichtung (1, 35), die ein erstes Hebeseil (14) aufweist und Maßnahmen umfasst, die dazu ausgebildet sind, eine lasttragende Verbindung mit einem bereits errichteten Teil der Windenergieanlage herzustellen, der sich oberhalb des Fundaments befindet,
eine zweite Hebevorrichtung (2, 20, 36), die ein zweites Hebeseil (21) aufweist, und
eine Ausgleichsvorrichtung, die dazu ausgebildet ist, eine Masse eines schwersten Teils in einen von der ersten Hebevorrichtung getragenen Anteil und einen von der zweiten Hebevorrichtung getragenen Anteil zu verteilen, wobei der von der ersten Hebevorrichtung getragene Massenanteil zwischen 1 % und 99 %, insbesondere zwischen 20 % und 80 %, weiter insbesondere zwischen 40 % und 60 % liegt, und wobei vorzugsweise die erste Hebevorrichtung und die zweite Hebevorrichtung jeweils etwa 50 % tragen,
wobei während des Hebens des schwersten Teils die Verteilung der Last über mindestens die erste und die zweite Hebevorrichtung in einem Verhältnis zwischen der maximalen Hebekapazität der ersten Hebevorrichtung und einer Masse eines schwersten Teils erfolgt, das größer als 0,2 und kleiner als 1 ist, wobei das schwerste Teil ein Teil ist, das als ein Stück gehoben wird und das zu einem Gierteil der Windenergieanlage gehört,
wobei das erste und das zweite Hebeseil (14, 21) jeweils mit dem zu hebenden Teil verbindbar sind,
**dadurch gekennzeichnet, dass** die zweite Hebevorrichtung (20, 36) Maßnahmen umfasst, die dazu ausgebildet sind, eine lasttragende Verbindung mit einem Turm der Windenergieanlage herzustellen, und insbesondere auch Maßnahmen zum Bewegen der zweiten Hebevorrichtung entlang des Turms umfasst.

2. Hebesystem nach Anspruch 1, **dadurch gekennzeichnet, dass** die erste Hebevorrichtung eine maximale Hebelast von weniger als 100 Tonnen und weiter insbesondere von weniger als 80 Tonnen aufweist und dass das schwerste Teil eine Masse von mehr als 100 Tonnen aufweist.

3. Hebesystem nach Anspruch 1, ferner umfassend eine dritte Hebevorrichtung, wobei die dritte Hebevorrichtung zumindest während eines Teils des Hebevorgangs einen Anteil der Masse des schwersten Teils trägt, und insbesondere wobei die dritte Hebevorrichtung ein konventioneller Kran ist, der neben und getrennt von der Windenergieanlage angeordnet ist.

4. Verfahren für einen Hebevorgang unter Verwendung eines Hebesystems für mindestens eines von einer Installation, einer Demontage und/oder einer Wartung einer Windenergieanlage (3), wobei die Windenergieanlage ein Fundament (11), einen Turm (4), einen Gierteil und einen Rotor mit mindestens 80 m Durchmesser mit mindestens einem Blatt (7) umfasst, wobei das Hebesystem eine erste Hebevorrichtung (1, 35) umfasst, die ein erstes Hebeseil (14) aufweist und Maßnahmen zur Herstellung einer lasttragenden Verbindung mit einem bereits errichteten Teil der Windenergieanlage umfasst, der sich oberhalb des Fundaments befindet,
wobei das Hebesystem eine zweite Hebevorrichtung (2, 20, 36) umfasst, die ein zweites Hebeseil (21) aufweist und wobei das Hebesystem ferner eine Ausgleichsvorrichtung umfasst, so dass diese die Masse des schwersten Teils in einen von der ersten Hebevorrichtung getragenen Teil und einen von der zweiten Hebevorrichtung getragenen Teil aufteilt, wobei der von der ersten Hebevorrichtung getragene Massenanteil zwischen 1 % und 99 %, insbesondere zwischen 20 % und 80 %, weiter insbesondere zwischen 40 % und 60 % liegt, und wobei vorzugsweise die erste Hebevorrichtung und die zweite Hebevorrichtung jeweils etwa 50 % tragen,
wobei während des Hebens des schwersten Teils das Hebesystem die Last über mindestens die erste und die zweite Hebevorrichtung in einem Verhältnis zwischen der maximalen Hebekapazität der ersten Hebevorrichtung und einer Masse eines schwersten Teils verteilt, das größer als 0,2 und kleiner als 1 ist, wobei das schwerste Teil ein Teil ist, das als ein Stück gehoben wird und das zum Gierteil der Windenergieanlage gehört,
wobei das erste und das zweite Hebeseil (14, 21) jeweils mit dem zu hebenden Teil verbindbar sind, und
**dadurch gekennzeichnet, dass** die zweite Hebevorrichtung (20, 36) Maßnahmen zur Herstellung einer lasttragenden Verbindung mit dem Turm der Windenergieanlage umfasst und insbesondere auch Maßnahmen zum Bewegen der zweiten Hebevorrichtung entlang des Turms umfasst.

5. Verfahren nach Anspruch 4, ferner umfassend die Schritte: Heben des schwersten Teils durch mindestens die erste Hebevorrichtung und die zweite Hebevorrichtung, **dadurch gekennzeichnet, dass** während des Hebevorgangs ein größter, von der ersten Hebevorrichtung getragener Massenanteil des schwersten Teils weniger als 99 %, insbesondere weniger als 80 %, weiter insbesondere weniger als 60 % und vorzugsweise etwa 50 % beträgt, wobei das schwerste Teil ein schwerstes Teil ist, das als ein Stück gehoben wird und zum Gierteil der Windenergieanlage gehört.

6. Verfahren nach Anspruch 5, **dadurch gekennzeichnet, dass** während eines Teils des Hebevorgangs des schwersten Teils durch mindestens eine Kombination der ersten Hebevorrichtung und der zweiten Hebevorrichtung eine Hebeposition besteht, in der die erste Hebevorrichtung überlastet wäre, falls nur die erste Hebevorrichtung das schwerste Teil tragen würde, und insbesondere eine Hebeposition besteht, in der die zweite Hebevorrichtung überlastet wäre, falls nur diese zweite Vorrichtung das schwerste Teil tragen würde.

7. Verfahren für einen Hebevorgang unter Verwendung eines Hebesystems nach Anspruch 4, **dadurch gekennzeichnet, dass** ein oder mehrere Fixierpunkte teilweise oder vollständig am Turm installiert werden, um von dem Kletterkran verwendet zu werden, und später einer oder mehrere der Fixierpunkte teilweise oder vollständig entfernt wird bzw. werden, so dass die entfernten vollständigen Fixierpunkte (25) oder die entfernten Teile der Fixierpunkte für einen weiteren Hebevorgang für eine andere Windenergieanlage wiederverwendet werden können.

8. Verfahren nach Anspruch 7, wobei
• die Fixierpunkte (25) mittels Schrauben (44) am Turm (4) befestigt sind,
• die Schrauben (44) so angebracht sind, dass sie sich in horizontaler Weise durch eine Wand des Turms (4) erstrecken, insbesondere zum Verbinden zweier überlappender, aus Metall bestehender Turmsegmente (40, 41) miteinander, und
• mindestens ein Fixierpunkt vollständig oder teilweise unter Verwendung mindestens einer der Schrauben und unter Verwendung von Muttern, die den Fixierpunkt an den Schrauben befestigen und dadurch den Fixierpunkt am Turm befestigen, am Turm angebracht ist.

9. Verfahren nach Anspruch 4, dass die erste Hebevorrichtung (1) auf dem Gierteil der Windenergieanlage gelagert ist.

10. Verfahren nach Anspruch 4, wobei Fixierpunkte (25) am Turm vorgesehen sind,
wobei ein Kletterkran (24) an einem beliebigen der Fixierpunkte befestigt ist und sich entlang des Turms bewegen kann,
wobei beliebige der Fixierpunkte teilweise oder vollständig entfernbar sind, so dass sie nach der Installation der Windenergieanlage abgenommen und für die Installation, die Wartung oder die Demontage einer anderen Windenergieanlage wiederverwendet werden können.

## Revendications

1. Système de hissage pour au moins l'un parmi une installation, un démantèlement et une maintenance d'une éolienne (3), l'éolienne comprenant une fondation (11), une tour (4), une partie d'orientation en lacet et un rotor d'au moins 80 m de diamètre doté d'au moins une pale (7), le système de hissage comprenant
un premier dispositif de hissage (1, 35) qui comporte un premier câble de hissage (14) et comprend des mesures qui sont configurées pour créer une articulation porteuse de charge avec une partie déjà construite de l'éolienne qui est située au-dessus de la fondation,
un deuxième dispositif de hissage (2, 20, 36) qui comporte un deuxième câble de hissage (21), et
un dispositif d'équilibrage qui est configuré pour répartir une masse d'une partie la plus lourde dans une portion portée par le premier dispositif de hissage et une portion portée par le deuxième dispositif de hissage, dans lequel la portion de masse portée par le premier système de hissage est entre 1 % et 99 %, en particulier entre 20 % et 80 %, plus particulièrement entre 40 % et 60 % et de préférence dans lequel le premier dispositif de hissage et le deuxième dispositif de hissage portent chacun approximativement 50 %,
dans lequel, pendant le hissage de la partie la plus lourde, la répartition de la charge est faite sur au moins le premier et le deuxième dispositif de hissage selon un rapport entre la capacité de hissage maximale du premier dispositif de hissage et une masse d'une partie la plus lourde qui est supérieur à 0,2 et inférieur à 1, la partie la plus lourde étant une partie qui est hissée d'un seul tenant et qui appartient à une partie d'orientation en lacet de l'éolienne,
dans lequel les premier et deuxième câbles de hissage (14, 21) sont chacun aptes à être reliés à la partie devant être hissée,
**caractérisé en ce que** le deuxième dispositif de hissage (20, 36) comprend des mesures qui sont configurées pour créer une liaison porteuse de charge avec une tour de l'éolienne et comprend également en particulier des mesures pour le déplacement du deuxième dispositif de hissage le long de la tour.

2. Système de hissage selon la revendication 1, **caractérisé en ce que** le premier dispositif de hissage présente une charge de hissage maximale de moins de 100 tonnes et plus particulièrement de moins de 80 tonnes et **en ce que** la partie la plus lourde présente une masse de plus de 100 tonnes.

3. Système de hissage selon la revendication 1, comprenant en outre un troisième dispositif de hissage, dans lequel le troisième dispositif de hissage, au moins pendant une partie de l'opération de hissage, porte une partie de la masse de la partie la plus lourde et en particulier en ce que le troisième dispositif de hissage est une grue classique située à côté de l'éolienne et séparée de celle-ci.

4. Procédé pour une opération de hissage à l'aide d'un système de hissage pour au moins l'un parmi une installation, un démantèlement et une maintenance d'une éolienne (3), dans lequel l'éolienne comprend une fondation (11), une tour (4), une partie d'orientation en lacet et un rotor d'au moins 80 m de diamètre doté d'au moins une pale (7), dans lequel le système de hissage comprend un premier dispositif de hissage (1, 35) qui comporte un premier câble de hissage (14) et comprend des mesures pour la création d'une articulation porteuse de charge avec une partie déjà construite de l'éolienne qui est située au-dessus de la fondation,
dans lequel le système de hissage comprend un deuxième dispositif de hissage (2, 20, 36) qui comporte un deuxième câble de hissage (21) et
dans lequel le système de hissage comprend en outre un dispositif d'équilibrage de telle sorte qu'il répartisse la masse de la partie la plus lourde dans une partie portée par le premier dispositif de hissage et une partie portée par le deuxième dispositif de hissage, dans lequel la partie de masse portée par le premier système de hissage est entre 1 % et 99 %, en particulier entre 20 % et 80 %, plus particulièrement entre 40 % et 60 % et de préférence dans lequel le premier dispositif de hissage et le deuxième dispositif de hissage portent chacun approximativement 50 %,
dans lequel, pendant le hissage de la partie la plus lourde, le système de hissage répartit la charge sur au moins le premier et le deuxième dispositif de hissage selon un rapport entre la capacité de hissage maximale du premier dispositif de hissage et une masse d'une partie la plus lourde qui est supérieur à 0,2 et inférieur à 1, la partie la plus lourde étant une partie qui est hissée d'un seul tenant et qui appartient à la partie d'orientation en lacet de l'éolienne,
dans lequel les premier et deuxième câbles de hissage (14, 21) sont chacun aptes à être reliés à la partie devant être hissée, et
**caractérisé en ce que** le deuxième dispositif de hissage (20, 36) comprend des mesures pour la création d'une liaison porteuse de charge avec la tour de l'éolienne et comprend également en particulier des mesures pour le déplacement du deuxième dispositif de hissage le long de la tour.

5. Procédé selon la revendication 4, comprenant en outre les étapes de : hissage de la partie la plus lourde par au moins le premier dispositif de hissage et le deuxième dispositif de hissage, **caractérisé en ce que**, pendant l'opération de hissage, une partie de plus grande masse de la partie la plus lourde qui est portée par le premier dispositif de hissage est de moins de 99 %, en particulier de moins de 80 %, plus particulièrement de moins de 60 % et de préférence d'environ 50 %, la partie la plus lourde étant une partie la plus lourde qui est hissée d'un seul tenant et appartient à la partie d'orientation en lacet de l'éolienne.

6. Procédé selon la revendication 5, **caractérisé en ce que**, pendant une partie de l'opération de hissage de la partie la plus lourde par au moins une combinaison du premier dispositif de hissage et du deuxième dispositif de hissage, il existe une position de hissage où le premier dispositif de hissage serait surchargé si seul le premier dispositif de hissage portait la partie la plus lourde et en particulier il existe une position de hissage où le deuxième dispositif de hissage serait surchargé si seul ce deuxième dispositif portait la partie la plus lourde.

7. Procédé pour une opération de hissage à l'aide d'un système de hissage selon la revendication 4, **caractérisé en ce qu'**un ou plusieurs points de fixation sont partiellement ou complètement installés sur la tour afin d'être utilisés par la grue de montée et, ultérieurement, **en ce que** l'un quelconque parmi les un ou plusieurs points de fixation est partiellement ou complètement retiré de telle sorte que les points de fixation complets retirés (25) ou les parties retirées des points de fixation puissent être réutilisés pour une autre opération de hissage pour une autre éolienne.

8. Procédé selon la revendication 7, dans lequel
- les points de fixation (25) sont attachés à la tour (4) à l'aide de boulons (44),
- les boulons (44) sont attachés de façon à s'étendre d'une manière horizontale à travers une paroi de la tour (4), en particulier pour la liaison l'un à l'autre de deux segments de tour (40, 41) superposés constitués de métal, et
- au moins un point de fixation est attaché à la tour en utilisant complètement ou partiellement au moins l'un des boulons et en utilisant des écrous fixant le point de fixation aux boulons et fixant ainsi le point de fixation à la tour.

9. Procédé selon la revendication 4, selon lequel le premier dispositif de hissage (1) est porté sur la partie d'orientation en lacet de l'éolienne.

10. Procédé selon la revendication 4, dans lequel des points de fixation (25) sont ménagés sur la tour,
dans lequel une grue de montée (24) est fixée à l'un quelconque des points de fixation et est apte à se déplacer le long de la tour,
dans lequel l'un quelconque des points de fixation est apte à être partiellement ou totalement retiré de sorte qu'il puisse être enlevé après l'installation de l'éolienne et puisse être réutilisé pour l'installation ou la maintenance ou le démantèlement d'une autre éolienne.
